# EUROPÄISCHE PATENTANMELDUNG

(11) **EP 1 586 486 A1**
(43) Veröffentlichungstag der Anmeldung: **19.10.2005**
(21) Anmeldenummer: 05007913.6
(22) Anmeldetag: 11.04.2005
(51) Int. Cl.: B60R 13/10, B60R 19/50

(54) **Kennzeichenadapter für Kraftfahrzeuge**

(30) Priorität: 15.04.2004 DE 102004018259
(71) Anmelder: Dynamit Nobel Kunststoff GmbH, 91781 Weissenburg (DE)
(72) Erfinder: Sandner, Norbert, 90765 Fürth (DE); Weithmann, Martin, 97535 Wasserlosen (DE); Fluch, Detlef, 10115 Berlin (DE); Vaculik, Robert Dr., 91757 Treuchtlingen (DE)
(74) Vertreter: Scherzberg, Andreas Hans

(57) **Zusammenfassung**

Die Erfindung betrifft einen Kennzeichenadapter (1) zur Befestigung an der Verkleidung (2) eines Stoßfängers (3) für Kraftfahrzeuge zur Aufnahme eines Kennzeichenschildes.

Zur dauerhaften und spaltfreien Anlage des Kennzeichenadapters (1) an der Verkleidung (2) wird vorgeschlagen, dass der Kennzeichenadapter (1) angeformte Schnapphaken (4) aufweist, die in entsprechende Bohrungen (10) in der Verkleidung (2) einrastbar sind.

## Beschreibung

Die Erfindung betrifft einen Kennzeichenadapter zur Befestigung an der Verkleidung eines Stoßfängers für Kraftfahrzeuge zur Aufnahme eines Kennzeichenschildes.

Stoßfänger für Kraftfahrzeuge, die in unterschiedliche Länder geliefert werden sollen, werden häufig mit Kennzeichenadaptern (KZA) ausgerüstet, die die unterschiedlichen Kennzeichengrößen der einzelnen Länder aufnehmen können. Die Kennzeichenadapter werden an die Verkleidung des Stoßfängers angeschraubt, wobei die Anschraublöcher zunächst je nach Ländervariante in unterschiedlichen Positionen durch Bohren in den Stoßfänger eingebracht werden müssen.

Hierbei ist es sinnvoll für die Verschraubung die selben Schraubpositionen zu verwenden, die für die genormte Befestigung der Kennzeichen zu verwenden sind, um die Anzahl der verwendeten Schrauben zu minimieren.

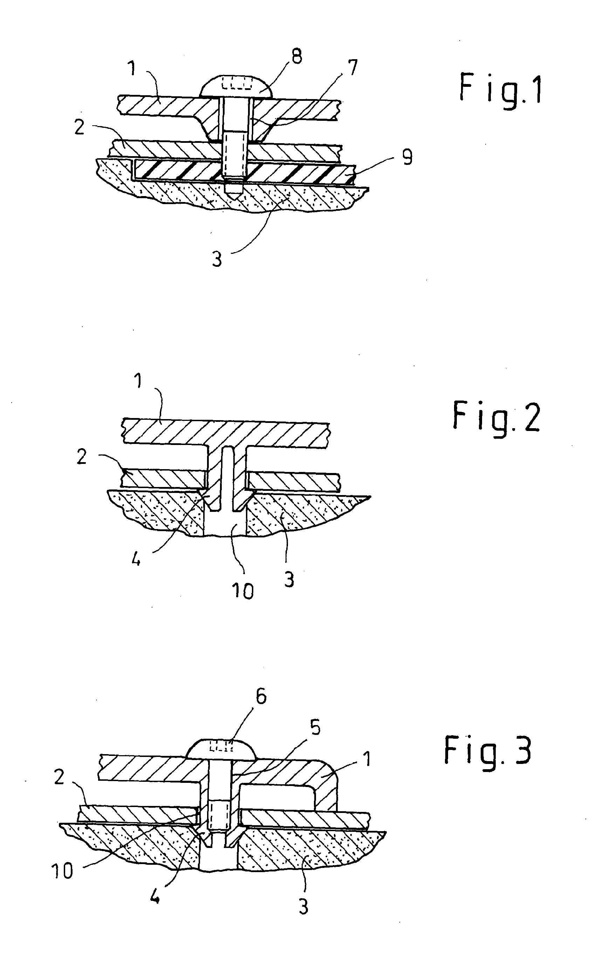

Die verwendeten selbstschneidenden Schrauben werden in je nach Ländervariante zu bohrende Löcher verschraubt und finden einen Widerhalt zur Aufnahme der Kräfte in einer Kunststoffplatte, die im Schaum hinter der Verkleidung eingelegt ist (Figur 1).

### Problemstellung:

a) Bei diesen Anschraubpositionen, meist in den Ecken der Kennzeichen, kommt es sehr häufig vor, dass die Mitte des Kennzeichenadapters keine spaltfreie Anlage zur Verkleidung hat, da in dieser Position (Y0) keine ausreichende Anpresskraft mehr vorhanden ist. Der Kennzeichenadapter wird nämlich in der Regel an seinen Ecken verschraubt, muss aber über der ganzen Kontur ohne Spalt anliegen. Ein Spalt ergibt sich aus Toleranzen in den Bauteilen und der Tatsache, dass die Verschraublöcher Luft zur Schraube haben und sich somit beim Transport oder Einsatz des Kennzeichenadapters innerhalb der Verschraubung an den Ecken etwas verschieben können.
b) Weiterhin kann beim Befestigen oder Wechseln der Kennzeichen in der Werkstatt die Position des Kennzeichenadapters verloren gehen oder der Kennzeichenadapter wird vom ungeübten Personal nur ungenügend (nicht passend mit unschönem Spaltbild) erneut verschraubt.
Die in dieser Beschreibung verwendeten Begriffe Kennzeichen und Kennzeichenschild bezeichnen denselben Gegenstand.

Der Erfindung liegt die Aufgabe zu Grunde, einen Kennzeichenadapter nach dem Oberbegriff des Anspruchs 1 so zu verbessern, dass einerseits eine spaltfreie Anlage des Kennzeichenadapters an der Verkleidung erreicht werden kann und andererseits beim Befestigen oder Wechseln eines Kennzeichens die Position, d. h. die genaue Lage des Kennzeichenadapters erhalten bleibt.

Erfindungsgemäß wird diese Aufgabe durch die Merkmale des Anspruchs 1 gelöst.

Dadurch, dass der Kennzeichenadapter angeformte Schnapphaken aufweist, die in entsprechende Bohrungen in der Verkleidung einrastbar sind, kann der Kennzeichenadapter spaltfrei und unverlierbar an der Verkleidung befestigt werden.

Vorteilhafterweise ist zumindest ein Schnapphaken im Mittenbereich des Kennzeichenadapters angeordnet. Dies bedingt natürlich eine entsprechende Bohrung in der Verkleidung des Stoßfängers, damit der Schnapphaken in diese Bohrung eingreifen und einschnappen bzw. verrasten kann. Durch diesen Schnapphaken im Mittenbereich des Kennzeichenadapters wird eine Vorspannung aufgebracht, die eine saubere Anlage des Kennzeichenadapters an der Verkleidung sicherstellt. Hierdurch ist eine spaltfreie Anlage über der gesamten Kontur des Kennzeichenadapters erreicht.

Zur dauerhaften Sicherung der Befestigung des Kennzeichenadapters an der Verkleidung weist der Schnapphaken bevorzugt eine Bohrung auf, in die eine Spreiz-Schraube einschraubbar ist, die den Schnapphaken spreizt. Diese dauerhafte Sicherung der Befestigung wird also durch eine Spreiz-Schraube sichergestellt, die zwischen den beiden Schnapphaken eingeschraubt wird und die Schnapphaken spreizt.

Hierbei wird bevorzugt dieselbe Schraube verwendet, die für die Befestigung des Kennzeichens bzw. Kennzeichenschildes am Kennzeichenadapter verwendet wird.

Da es sich bei der Befestigung des Kennzeichenadapters an der Verkleidung mit Hilfe der Schnapphaken um eine formschlüssige Verbindung handelt, kann auf eine Verwendung einer Kunststoffplatte zwischen Schaum und Verkleidung, wie sie im Stand der Technik verwendet wird, verzichtet werden.

Nachfolgend wird die Erfindung an Hand von drei Figuren näher erläutert.

Figur 1 zeigt einen Kennzeichenadapter 1 und seine Befestigung nach dem Stand der Technik.

Der Stoßfänger 3 (in Figur 1 ist nur ein Teil des Schaums des Stoßfängers gezeigt) ist mit einer Verkleidung 2 verkleidet. Der Kennzeichenadapter 1 weist zu seiner Befestigung eine Bohrung 7 auf. Diese Bohrung 7 wird von einer selbstschneidenden Schraube 8 durchragt, welche mit der Verkleidung 2 verschraubt ist. Die Schraube 8 findet einen Widerhalt zur Aufnahme der Kräfte in einer Kunststoffplatte 9, die im Schaum hinter der Verkleidung 2 eingelegt ist.

Die Nachteile dieser Befestigung sind in der Beschreibungseinleitung beschrieben.

Die Figuren 2 und 3 zeigen einen erfindungsgemäßen Kennzeichenadapter 1. Dieser weist senkrecht abstehende angeformte Schnapphaken 4 auf, mit denen der Kennzeichenadapter 1 an der Verkleidung 2 zu befestigen ist.

Hierzu werden in die Verkleidung 2 Bohrungen 10 eingebracht, die sich bis in den Schaum 3 erstrecken können.

Zur Befestigung werden die Schnapphaken 4 durch die Bohrungen 10 gesteckt, wobei sie sich nach Überwindung der Bohrung 10 wieder etwas radial ausdehnen und dadurch der Kennzeichenadapter 1 unverlierbar mit der Verkleidung 2 verbunden ist.

Zur dauerhaften unverrückbaren Befestigung weisen die Schnapphaken 4 (gezeigt ist nur ein einziger Schnapphaken) eine Bohrung 5 auf, in die eine Spreiz-Schraube 6 einschraubbar ist. Beim Einschrauben spreizt diese Spreiz-Schraube 6 die Schnapphaken 4 radial auseinander, so dass der Kennzeichenadapter 1 fest und unverrückbar mit der Verkleidung 2 verbunden ist.

Diese Spreiz-Schraube 6 wird zugleich auch zur Befestigung des Kennzeichenschildes am Kennzeichenadapter 1 verwendet.

Zur Verbesserung der spaltfreien Anlage des Kennzeichenadapters 1 an der Verkleidung 2 ist zumindest ein Schnapphaken 4 im Mittenbereich des Kennzeichenadapters 1 angeordnet. Die weiteren Schnapphaken 4 sind an den Ecken des Kennzeichenadapters 1 angeordnet. Bevorzugt werden insgesamt fünf Schnapphaken 4 verwendet.

## Patentansprüche

1. Kennzeichenadapter (1) zur Befestigung an der Verkleidung (2) eines Stoßfängers (3) für Kraftfahrzeuge zur Aufnahme eines Kennzeichenschildes, **dadurch gekennzeichnet, dass** der Kennzeichenadapter (1) angeformte Schnapphaken (4) aufweist, die in entsprechende Bohrungen (10) in der Verkleidung (2) einrastbar sind.

2. Kennzeichenadapter nach Anspruch 1, **dadurch gekennzeichnet, dass** zumindest ein Schnapphaken (4) im Mittenbereich des Kennzeichenadapters (1) angeordnet ist.

3. Kennzeichenadapter nach Anspruch 1 oder 2, **dadurch gekennzeichnet, dass** der Schnapphaken (4) eine Bohrung (5) aufweist, in die eine Spreiz-Schraube (6) einschraubbar ist, die den Schnapphaken (4) spreizt.

4. Kennzeichenadapter nach Anspruch 3, **dadurch gekennzeichnet, dass** die Spreiz-Schraube (6) auch zur Befestigung des Kennzeichenschildes am Kennzeichenadapter (1) verwendbar ist.
